# EUROPÄISCHE PATENTSCHRIFT

(11) **EP 1 112 898 B1**
(45) Veröffentlichungstag und Bekanntmachung des Hinweises auf die Patenterteilung: **24.03.2004**
(21) Anmeldenummer: 00125303.8
(22) Anmeldetag: 28.11.2000
(51) Int. Cl.: B60R 21/20

(54) **Fahrzeuglenkrad mit einer Gassackmodul-Abdeckung**
Steering wheel comprising an airbag module cover
Volant avec un couvercle pour module de coussin gonflable

(30) Priorität: 30.12.1999 DE 29922988 U
(43) Veröffentlichungstag der Anmeldung: 04.07.2001
(73) Patentinhaber: TRW Automotive Safety Systems GmbH, 63743 Aschaffenburg (DE)
(72) Erfinder: Lorenz, Christian, 63849 Leidersbach 3 (DE); Neupert, Ralph, 63839 Kleinwallstadt (DE)
(74) Vertreter: Kitzhofer, Thomas, Dipl.-Ing.

(56) Entgegenhaltungen:
- DE-A- 2 320 272
- DE-U- 20 009 378
- DE-U- 29 922 987
- US-A- 5 092 627
- US-A- 5 306 040
- PATENT ABSTRACTS OF JAPAN vol. 1995, no. 06, 31. Juli 1995 (1995-07-31) & JP 07 061310 A (TOYODA GOSEI CO LTD), 7. März 1995 (1995-03-07)

## Beschreibung

Die Erfindung betrifft ein Fahrzeuglenkrad mit eine Gassackmodul-Abdeckung.

Eine Abdeckung eines Gassackmoduls reißt durch den sich entfaltenden Gassack oder durch eine andere Einrichtung im Rückhaltefall auf und soll die bis dahin verschlossene Auftrittsöffnung möglichst schnell freigeben. Der Schwenkradius des Öffnungsabschnitts sollte dabei möglichst klein sein, damit die Gefahr, durch den nach außen schwenkenden Öffnungsabschnitt getroffen zu werden, für den Insassen möglichst klein ist. Zwar ist bei ideal sitzenden Insassen keine Gefährdung vorhanden, doch könnten Insassen sich beispielsweise an die Armaturentafel oder das Lenkrad lehnen und durch den nach außen schwenkenden Öffnungsabschnitt im Rückhaltefall getroffen werden.

In der DE-2 320 272 A ist ein in einer Instrumententafel angeordnetes Beifahrer-Gassackmodul gezeigt, dessen Abdeckung durch zwei Nuten in zwei gegeneinander verschwenkbare Abschnitte aufgeteilt ist. Die Abwinkelung der Abdeckkappe erfolgt bei Kontakt mit dem Fahrzeuginsassen.

Die US-A-5 306 040 zeigt eine Gassackmodul-Abdeckung für ein Fahrzeuglenkrad mit einer vorgegebenen Aufreißlinie, längs der sich die Abdeckung im Rückhaltefall öffnet und die wenigstens einen im nicht geöffneten Zustand der Abdeckung eine Austrittsöffnung verschließenden öffnungsabschnitt der Abdeckung definiert.

Die Erfindung schafft ein Fahrzeuglenkrad mit einer Gassackmodul-Abdeckung, die die Verletzungsgefahr, die von dem Öffnungsabschnitt ausgeht, deutlich verringert. Dies wird durch die Merkmale des Anspruchs 1 erreicht. Durch den zweiten Scharnierabschnitt, der den Öffnungsabschnitt unterteilt, wird die Stabilität des Öffnungsabschnitts nach dem Öffnen der Abdeckung verringert, denn der zweite Scharnierabschnitt erlaubt Teilabschnitten, sich zueinander zu bewegen, also vorzugsweise zueinander verschwenkt zu werden. Dadurch wird es möglich, daß der Bewegungsradius des Öffnungsabschnitts verringert wird. Der Öffnungsabschnitt kann, beispielsweise durch den sich entfaltenden Gassack hervorgerufen, um den zweiten Scharnierabschnitt geknickt werden, die Teilabschnitte verschwenken also zueinander, und in diesem geknickten oder teilweise geknickten Zustand wird sich der Öffnungsabschnitt dann nach außen bewegen. Die Lage des ersten und des zweiten Scharnierabschnitts und die der Aufreißlinie sind dabei so auf den Lenkradkranz abgestimmt, daß der Öffnungsabschnitt bis axial hinter den Lenkradkranz schwenken kann, so daß im vollständig geöffneten Zustand der Abdeckung der Öffnungsabschnitt möglichst weit weg vom Insassen positioniert ist. Ein weiterer Vorteil der Erfindung besteht darin, daß der Öffnungsabschnitt, der eine Klappe bildet, nach dem Entfalten des Gassacks und möglicherweise Zusammenfallen des Gassacks nach dem Unfall zwar teilweise in Richtung zum Insassen gerichtet sein kann, bei einem Sekundäraufprall, bei dem es zu einem Kontakt des Insassen mit dem Öffnungsabschnitt kommt, aber aufgrund seiner geringen Stabilität keine Verletzungen hervorruft. Die Stabilität, gerade gegen Knicken, wird durch den zweiten Scharnierabschnitt herabgesetzt. Zudem sind im geöffneten Zustand des Öffnungsabschnitts die Teilabschnitte nicht parallel zueinander ausgerichtet, so daß eine auf den das äußere Ende des Öffnungsabschnitts definierenden Rand ausgeübte Kraft sehr gering sein kann, um den Öffnungsabschnitt zu knicken.

Vorzugsweise verlaufen der erste und der zweite Scharnierabschnitt parallel zueinander, um keine Torrisionskräfte auf den Öffnungsabschnitt auszuüben.

Scharnierabschnitte können durch Filmscharniere gebildet sein, also durch in ihrer Dicke verringerte Bereiche der Gassackmodul-Abdeckung, was die Herstellungskosten verringert.

Die Abdeckung hat darüber hinaus gemäß einer Ausgestaltung eine Vorderwand und eine Seitenwand, was gerade bei Abdeckungen für Lenkrad-Gassackmodule üblich ist. Der erste Scharnierabschnitt ist bei dieser Ausführungsform in der Seitenwand vorgesehen. Durch diese Lage des ersten Scharnierabschnitts wird sich der Öffnungsabschnitt weniger weit in Richtung zum Insassen bewegen als bei einer Ausführungsform, bei der der erste Schamierabschnitt an der Vorderwand vorgesehen ist.

Wenn die Scharnierabschnitte einer Verschwenkung der an ihr angelenkten Abschnitte der Abdeckung unterschiedliche Widerstände entgegensetzen und/oder unterschiedliche Widerstände in den entgegengesetzten möglichen Schwenkrichtungen entgegensetzen, kann der Bewegungsablauf der einzelnen Teilabschnitte beim Öffnen der Abdeckung so beeinflußt werden, daß beispielsweise der Öffnungsabschnitt in der ersten Öffnungsphase geknickt wird, bevor der Öffnungsabschnitt als Ganzes ganz nach außen geschwenkt wird. Auch die Lagen der Schamierabschnitte und gegebenenfalls das Öffnungsverhalten des Gassacks können den Öffnungsverlauf beeinflussen.

Um ein Zurückschwenken des Öffnungsabschnitts zu verhindern, sind die Scharnierabschnitte so aufeinander abgestimmt, daß der Öffnungsabschnitt, nachdem er axial bis hinter den Lenkradkranz geschwenkt ist, am Zurückschwenken durch den Lenkradkranz selbst, der in diesem Fall als Anschlag wirkt, gehindert wird.

Weitere Merkmale und Vorteile der Erfindung ergeben sich aus der nachfolgenden Beschreibung und aus den nachfolgenden Zeichnungen, auf die Bezug genommen wird.

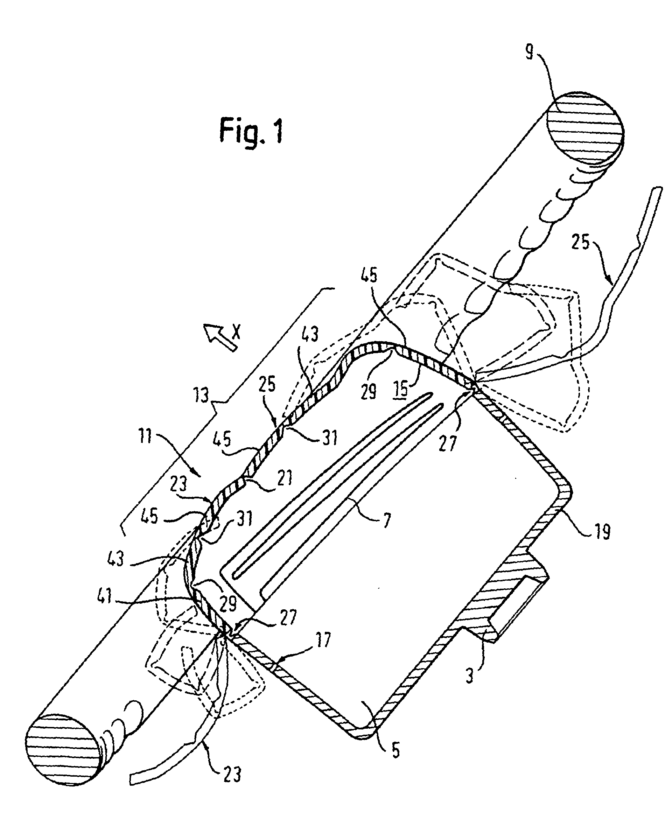

Fig. 1 zeigt eine schematische Querschnittsansicht durch ein erfindungsgemäßes Fahrzeuglenkrad mit einer erfindungsgemäßen Abdeckung

In Fig. 1 ist ein Fahrzeuglenkrad dargestellt, das im Bereich der Nabe 3 ein Gassackmodul mit einem Gasgenerator 5 und einem Gassack 7 aufweist. Mit 9 ist ein Lenkradkranz bezeichnet. Ein topfförmige Gassackmodul-Abdeckung, im folgenden nur kurz Abdeckung 11 genannt, schließt das Gassackmodul zur Vorderseite ab. Die Abdeckung 11 hat eine Vorderwand 13 und eine umlaufende, an der Vorderwand 13 einstükkig angeformte Seitenwand 15. Die Abdeckung 11 ist im Bereich 17 mit einem ebenfalls topfförmigen Modulbehälter 19, der auch eine topfförmig umgeformte Lenkradnabe 3 sein kann, verbunden. Die Abdeckung 11, die aus Kunststoffmaterial besteht, hat mehrere vorgegebene Aufreißlinien, die in Draufsicht die Form eines "H" haben, wobei in Fig. 1 nur der Quersteg des "H" zu sehen ist, der das Bezugszeichen 21 trägt und im folgenden Aufreißlinie 21 genannt wird. Durch die Aufreißlinien werden zwei Öffnungsabschnitte 23, 25 definiert, die zwei Klappen bilden, welche die Austrittsöffnung (die das Ausmaß etwa der Vorderwand 13 hat) für den Gassack 7 im nicht aktivierten Zustand verschließen. Jeder Öffnungsabschnitt 23, 25 ist neben den Aufreißlinien 21 auch durch ein zugeordnetes erstes Scharnier 27, im folgenden Scharnierabschnitt 27 genannt, definiert, welcher den Übergang der Öffnungsabschnitte 23, 25 zum Rest der Abdeckung 11 bildet. Die ersten Scharnierabschnitte 27 werden durch Filmscharniere, also Vertiefungen in der Abdeckung 11 erzeugt und sind im Bereich der Seitenwand, also möglichst weit vom Insassen weg angeordnet. Darüber hinaus hat jeder Öffnungsabschnitt 23, 25 noch einen zweiten und einen dritten Scharnierabschnitt 29 bzw. 31, wobei der zweite Scharnierabschnitt 29 im Bereich des Übergangs der Stirnwand 15 zur Vorderwand 13 und die dritten Scharnierabschnitte 31 zwischen den zweiten Scharnierabschnitten 29 und der Aufreißlinie 21 angeordnet sind. Auch die zweiten und dritten Scharnierabschnitte 29, 31 sind durch Filmscharniere gebildet. Im übrigen sind alle Scharnierabschnitte 27 bis 31 parallel zueinander angeordnet und haben einen linienförmigen Verlauf. Die zweiten und dritten Scharnierabschnitte teilen jeden Öffnungsabschnitt 23, 25 in Teilabschnitte 41 bis 45, die durch die Scharnierabschnitte, wie im folgenden noch erläutert wird, zueinander verschwenkt werden können.

Wenn der Gasgenerator 5 aktiviert und der Gassack 7 aufgeblasen wird, führt der Gassack 7 zum Aufreißen der Abdeckung 11 längs der Aufreißlinien, u.a. der Aufreißlinie 21, so daß sich die Öffnungsabschnitte 23, 25 vom Rest der Abdeckung trennen und nur noch über die ersten Scharnierabschnitte 27 am Rest der Abdeckung 11 befestigt bleiben. Mit unterbrochenen Linien sind die Bewegungen der Öffnungsabschnitte 23, 25 während des Öffnens der Abdeckung in verschiedenen Phasen der Bewegung dargestellt. Mit durchgezogenen Linien ist schließlich die endgültige Position, wenn beide Öffnungsabschnitte 23, 25 ganz nach außen geschwenkt sind, gezeigt.

Die Scharnierabschnitte 29, 31 setzen einer Verschwenkung der Teilabschnitte um die durch sie gebildeten Achsen unterschiedliche Widerstände entgegen. Die Scharnierabschnitte 29 setzen beispielsweise einem Verschwenken einen geringeren Widerstand entgegen als die Scharnierabschnitte 31, was beispielsweise durch die verringerte Dicke der Abdeckung im Bereich der zweiten Scharnierabschnitte 29 erreichbar ist, d.h., die Dicke der Abdeckung in den Scharnierabschitten 29, 31 ist unterschiedlich. Durch die unterschiedlichen Widerstände, die die Scharnierabschnitte einer Verschwenkung entgegensetzen und durch die Stellen, an denen der sich entfaltende Gassack 27 in der Anfangsphase der Öffnungsbewegung die Öffnungsabschnitte kontaktiert, kann erreicht werden, daß beide Öffnungsabschnitte 23, 25 zuerst im Bereich der zweiten Scharnierabschnitte 29 einknicken, bevor eine ähnliche Knickbewegung im Bereich der dritten Scharnierabschnitte 31 erfolgt.

Dadurch, daß durch die beiden Scharnierabschnitte 29 zuerst ein Verschwenken der beiden Teilabschnitte 43, 51 zum Teilabschnitt 41 erfolgt und erst später eine deutliche Verschwenkung des Teilabschnitts 45 zum Teilabschnitt 43 zustande kommt, werden beide Öffnungsabschnitte 23, 25 kaum in Richtung X zum Fahrer hin verschwenkt. Die Öffnungsbewegung ist vielmehr ein Einknicken der Öffnungsabschnitte 23, 25 und ein nach außen und nach hinten Bewegen dieser eingeknickten Öffnungsabschnitte. Durch das Einknicken ergibt sich insgesamt ein geringer Schwenkradius beider Öffnungsabschnitte 23, 25 um die Scharnierabschnitte 27, was zu einem geringen Gefährdungspotential der sich bewegenden Öffnungsabschnitte 23, 25 führt. Beim Schwenken dieser klappenartigen Öffnungsabschnitte 23, 25 bewegen sich diese, wie mit unterbrochenen Linien dargestellt ist, mit Abstand vom Lenkradkranz 9 an diesem vorbei bis, in axialer Richtung hinter den Lenkradkranz 9. Die beiden Öffnungsabschnitte 23, 25, die sich fast zu einem "U" in sich zusammengeklappt haben, werden sich am Ende der Schwenkbewegung wieder auseinanderklappen, wie mit durchgezogenen Linien dargestellt. Ein Zurückklappen ist aber nicht mehr möglich, da, wie in Fig. 1 zu sehen ist, nach dem Auseinanderklappen beide Öffnungsabschnitte 23, 25 so weit auseinandergeklappt sind, daß sie am Lenkradkranz 9 anschlagen können. Die Geometrie der Öffnungsabschnitte 23, 25 ist also auf die Lage des Lenkradkranzes 9 so abgestimmt, daß dieser als Anschlag für die beiden völlig nach außen geschwenkten Öffnungsabschnitte 23, 25 wirkt. Die Öffnungsabschnitte 23, 25 stehen damit bei einem Sekundäraufprall keinesfalls in Richtung zum Insassen.

## Patentansprüche

1. Fahrzeuglenkrad mit einem Lenkradkranz (9), einem Gassackmodul sowie einer Gassackmodul-Abdeckung (11) mit
einer vorgegebenen Aufreißlinie (21), längs der sich die Abdeckung (11) im Rückhaltefall öffnet und die wenigstens einen im nicht geöffneten Zustand der Abdeckung (11) eine Austrittsöffnung verschließenden Öffnungsabschnitt (23, 25) der Abdeckung (11) definiert, und
mit wenigstens einem ersten Scharnierabschnitt (27) an der Abdeckung (11), über den der Öffnungsabschnitt (23, 25) beim Öffnen an der Abdeckung (11) fixiert bleibt,wobei der Öffnungsabschnitt (23, 25) wenigstens einen zweiten Scharnierabschnitt (29, 31) hat, der den Öffnungsabschnitt (23, 25) in Teilabschnitte (41, 43, 45) unterteilt und eine Bewegung zwischen den Teilabschnitten (41, 43, 45) erlaubt,
und wobei die Lage der Scharnierabschnitte (27, 29, 31) und die Lage der Aufreißlinie (21) so auf den Lenkradkranz (9) abgestimmt sind, daß der Öffnungsabschnitt (23, 25) bis axial hinter den Lenkradkranz (9) schwenken kann.

2. Fahrzeuglenkrad nach Anspruch 1, **dadurch gekennzeichnet daß** der zweite Scharnierabschnitt (29, 31) parallel zum ersten Scharnierabschnitt (27) verläuft.

3. Fahrzeuglenkrad nach Anspruch 1 oder 2, **dadurch gekennzeichnet, daß** wenigstens ein Scharnierabschnitt (27, 29, 31) durch ein Filmscharnier gebildet ist.

4. Fahrzeuglenkrad nach einem der vorhergehenden Ansprüche, **dadurch gekennzeichnet, daß** die Abdeckung (11) eine Vorderwand (13) und eine Seitenwand (15) hat und der erste Scharnierabschnitt (27) in der Seitenwand (15) vorgesehen ist.

5. Fahrzeuglenkrad nach einem der vorhergehenden Ansprüche, **dadurch gekennzeichnet, daß** die zweiten Schamierabschnitte (29) einer Verschwenkung um die durch sie definierten Achsen einen geringeren Widerstand entgegensetzen als dritte Scharnierabschnitte (31) und an solchen Stellen angeordnet sind, daß der Öffnungsabschnitt (23, 25) in einem um den zweiten Schamierabschnitt (29) geknickten Zustand verschwenkt wird.

6. Fahrzeuglenkrad nach Anspruch 1, **dadurch gekennzeichnet, daß** die Scharnierabschnitte (27, 29, 31) so aufeinander abgestimmt sind, daß der Öffnungsabschnitt (23, 25), nachdem er axial bis hinter den Lenkradkranz (9) geschwenkt ist, am Zurückschwenken durch den als Anschlag wirkenden Lenkradkranz (9) gehindert wird.

## Claims

1. A vehicle steering wheel comprising a steering wheel rim (9), a gas bag module as well as a gas bag module cover (11) including
a predetermined tear line (21) along which the cover (11) opens in a restraint situation and which defines at least one opening portion (23,25) of the cover (11), which closes an exit opening in the non-opened condition of the cover (11), and
at least one first hinge portion (27) at the cover (11), by which the opening portion (23, 25) remains fixed in place at the cover (11) when it is opened, the opening portion (23, 25) having at least one second hinge portion (29, 31) which divides the opening portion (23, 25) into partial portions (41, 43, 45) and allows a movement of the partial portions (41, 43, 45) in relation to each other,
and the position of the hinge portions (27, 29, 31) and the position of the tear line (21) being adjusted to the steering wheel rim (9) such that the opening portion (23, 25) can swivel to axially behind the steering wheel rim (9).

2. The vehicle steering wheel as claimed in claim 1, **characterized in that** the second hinge portion (29, 31) extends parallel to the first hinge portion (27).

3. The vehicle steering wheel as claimed in claim 1 or 2, **characterized in that** at least one hinge portion (27, 29, 31) is formed by a film hinge.

4. The vehicle steering wheel as claimed in any of the preceding claims, **characterized in that** the cover (11) has a front wall (13) and a side wall (15) and the first hinge portion (27) is provided in the side wall (15).

5. The vehicle steering wheel as claimed in any of the preceding claims, **characterized in that** the second hinge portions (29) put up a smaller resistance to being swiveled about the axes defined by them than third hinge portions (31) and are disposed at such points that the opening portion (23, 25) is swiveled in a condition kinked about the second hinge portion (29).

6. The vehicle steering wheel as claimed in claim 1, **characterized in that** the hinge portions (27, 29, 31) are adapted to each other such that after having swiveled axially to behind the steering wheel rim (9), the opening portion (23, 25) is prevented from swiveling back by the steering wheel rim (9) acting as a stop.

## Revendications

1. Volant de direction de véhicule, comportant une couronne de volant de direction (9), un module de coussin à gaz ainsi qu'un couvercle (11) de module de coussin à gaz comportant
une ligne de déchirement (21) prédéterminée, le long de laquelle le couvercle (11) s'ouvre en cas de retenue et qui définit au moins un tronçon d'ouverture (23, 25) du couvercle (11) fermant une ouverture de sortie à l'état non ouvert du couvercle (11), et
au moins un premier tronçon à charnière (27) sur le couvercle (11), par l'intermédiaire duquel le tronçon d'ouverture (23, 25) reste fixé sur le couvercle à l'ouverture, le tronçon d'ouverture (23, 25) ayant au moins un deuxième tronçon à charnière (29, 31) qui subdivise le tronçon d'ouverture (23, 25) en tronçons partiels (41, 43, 45) et qui permet un mouvement entre les tronçons partiels (41, 43, 45),
et la position des tronçons à charnière (27, 29, 31) et la position de la ligne de déchirement (21) étant adaptées à la couronne de volant de direction (9) de telle sorte que le tronçon d'ouverture (23, 25) puisse pivoter jusque axialement derrière la couronne de volant de direction (9).

2. Volant de direction de véhicule selon la revendication 1, **caractérisé en ce que** le deuxième tronçon à charnière (29, 31) s'étend parallèlement au premier tronçon à charnière (27).

3. Volant de direction de véhicule selon la revendication 1 ou 2, **caractérisé en ce qu'**au moins un tronçon à charnière (27, 29, 31) est formé par une charnière à ruban.

4. Volant de direction de véhicule selon l'une des revendications précédentes, **caractérisé en ce que** le couvercle (11) a une paroi antérieure (13) et une paroi latérale (15) et **en ce que** le premier tronçon à charnière (27) est prévu dans la paroi latérale.

5. Volant de direction de véhicule selon l'une des revendications précédentes, **caractérisé en ce que** les deuxièmes tronçons à charnière (29) opposent à un pivotement autour d'axes qu'ils définissent, moins de résistance que des troisièmes tronçons à charnière (31) et sont agencés à des emplacements tels que le tronçon d'ouverture (23, 25) est pivoté dans un état fléchi autour du deuxième tronçon à charnière (29).

6. Volant de direction de véhicule selon la revendication **caractérisé en ce que** les tronçons à charnière (27, 29, 31) sont adaptés les uns aux autres de telle sorte que le tronçon d'ouverture (23, 25), après avoir été pivoté axialement jusque derrière la couronne de volant de direction (9) est empêché de pivoter en retour par la couronne de volant de direction (9) faisant office de butée.
